# EUROPEAN PATENT SPECIFICATION

(11) **EP 4 242 700 B1**
(45) Date of publication and mention of the grant of the patent: **14.10.2026**
(21) Application number: 21889448.3
(22) Date of filing: 26.10.2021
(51) Int. Cl.: G01V 8/20, F16P 3/14

(54) **SENSOR AND LOCKING DEVICE THEREFOR**
SENSOR UND VERRIEGELUNGSVORRICHTUNG DAFÜR
CAPTEUR ET DISPOSITIF DE VERROUILLAGE ASSOCIÉ

(30) Priority: 03.11.2020 KR 20200145247; 23.04.2021 KR 20210052751
(43) Date of publication of application: 13.09.2023
(73) Proprietor: Autonics Corporation, Busan 48002 (KR)
(72) Inventor: KIM, Byungyoung, Bucheon-si Gyeonggi-do 14709 (KR)
(74) Representative: Frenkel, Matthias Alexander
(86) International application number: PCT/KR2021/015107
(87) International publication number: WO 2022/097983

(56) References cited:
- DE-U1- 20 104 248
- FR-A1- 2 942 525
- JP-A- 2006 222 090
- KR-A- 20120 059 907
- KR-A- 20200 114 345
- KR-U- 20180 002 640
- KR-Y1- 200 452 848

## Description

### [Technical Field]

The following description relates to a sensor, and more particularly to a locking device for a multi-optical axis sensor capable of detecting a predetermined area.

### [Background Art]

A multi-optical axis sensor is a sensor for detecting a specific area by using a plurality of light sources. The multi-optical axis sensor may be used in various applications including entrances, elevators, moving walkways, escalators, and the like. That is, the multi-optical axis sensor may detect the presence of an individual or object in a specific area, and the sensor may be widely used in places where the function is required.

The multi-optical axis sensor may be used in a workplace, such as manufacturing facilities and the like. The workplace may be a space in which automated instruments are installed. The automated instruments may require maintenance periodically or in case of abnormal operation. When a worker enters a workplace for maintenance of automated instruments installed in the workplace, the operation of the multi-optical axis sensor may be stopped. In this case, a locking device for the multi-optical axis sensor may be required in order to stop the operation of the multi-optical axis sensor until the worker completely finishes the maintenance work. For example, a safety system may be required, in which if a worker enters a dangerous area and light is blocked in a sensor, the sensor transmits a light-blocking signal to a controller, and the controller stops the operation of mechanical equipment in response to the light-blocking signal.

Recently, research for securing work safety in a sensor installation environment is being actively conducted.

Document FR 2 942 525 A1 discloses a device that has a source for emitting a light beam, and a sensor for receiving the light beam. A blocking unit is arranged to block the light beam, where the blocking unit is controlled by a control unit. The blocking unit includes a mobile body movable between an open position, in which the beam passes freely, and a closed position in which the mobile body blocks the light beam.

The mobile body is pivotably assembled on a fixed body, and the control unit includes an electromagnet.

### [Disclosure of invention]

### [Technical Problem]

It is an objective of the present disclosure to solve the above and other problems. It is another objective of the present disclosure to provide a locking device for a sensor in order to prevent malfunction of the sensor.

It is another objective of the present disclosure to provide a locking device for a sensor in which a cover of the locking device may be stably fixed in position.

It is another objective of the present disclosure to provide a locking device for a sensor in which the locking device may be integrally coupled to the sensor.

It is another objective of the present disclosure to provide a locking device for a sensor in which when the locking device covers an optical path of the sensor, light to be incident on the sensor is blocked, and it is determined that a worker enters a dangerous area, such that the operation of mechanical equipment, such as robots, conveyor belts, etc., in the dangerous area may be stopped.

### [Technical Solution]

In order to achieve the above and other objectives, there are provided a locking device and a sensor assembly according to the independent claims. Further developments are set forth in the dependent claims.

### [Advantageous Effects of Invention]

A sensor and a locking device therefor according to the embodiments of the present disclosure have the following effects.

According to at least one of the embodiments of the present disclosure, a locking device for a sensor may be provided in which malfunction of the sensor may be prevented.

According to at least one of the embodiments of the present disclosure, a locking device for a sensor may be provided in which a cover of the locking device may be stably fixed in position.

According to at least one of the embodiments of the present disclosure, a locking device for a sensor may be provided in which the locking device may be integrally coupled to the sensor.

According to at least one of the embodiments of the present disclosure, when the locking device covers an optical path of the sensor, light to be incident on the sensor is blocked, and it is determined that a worker enters a dangerous area, such that the operation of mechanical equipment, such as robots, conveyor belts, etc., in the dangerous area may be stopped.

### [Brief Description of Drawings]

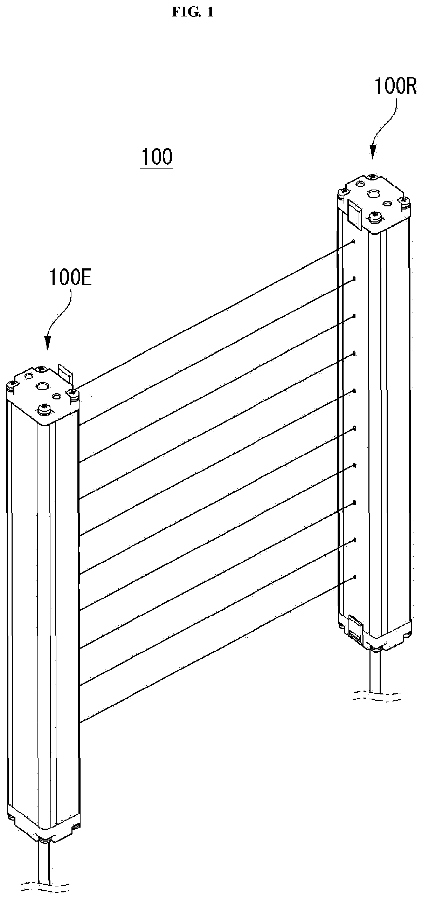

FIGS. 1 to 18 are diagrams illustrating examples of a sensor and a locking device therefor according to embodiments of the present disclosure.

### [Mode for the Invention]

Hereinafter, the present disclosure will be described in detail with reference to the accompanying drawings, in which the same reference numerals are used throughout the drawings to designate the same or similar components, and a redundant description thereof will be omitted.

The terms "module" and "unit" for elements used in the following description are given simply in view of the ease of the description, and do not have a distinguishing meaning or role.

In addition, it will be noted that a detailed description of known arts will be omitted if it is determined that the detailed description of the known arts can obscure the embodiments of the invention.

Further, the accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that, although the terms first, second, etc., may be used herein to describe various elements, these elements should not be limited by these terms. These terms are only used to distinguish one element from another.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

As used herein, the singular forms are intended to include the plural forms as well, unless the context clearly indicates otherwise.

In the present application, it should be understood that the terms "comprises," "includes," "has," etc. specify the presence of features, numbers, steps, operations, elements, components, or combinations thereof described in the specification, but do not preclude the presence or addition of one or more other features, numbers, steps, operations, elements, components, or combinations thereof.

A sensor 100 may be referred to as a multi-optical axis sensor 100. For example, the multi-optical axis sensor 100 may be referred to as an area sensor 100 given that the multi-optical axis sensor 100 detects a predetermined area.

Referring to FIG. 1, the multi-optical axis sensor 100 may include an emitter 100E and a receiver 100R. The emitter 100E may face the receiver 100R. The emitter 100E may emit light. The emitter 100E may include a light emitting element. The emitter 100 may be referred to as a light emitting unit 100E or a light projector 100E. The emitter 100E may include a plurality of light emitting elements. The plurality of light emitting elements may be sequentially or serially arranged on one surface of the emitter 100E.

The receiver 100R may detect light. The receiver 100R may include a light receiving element. The receiver 100R may be referred to as a light receiving unit 100R or an optical receiver 100R. The receiver 100R may include a plurality of light receiving elements. The plurality of light receiving elements may be sequentially or serially arranged on one surface of the receiver 100R.

The light provided by the emitter 100E may be detected by the receiver 100R. If an individual or an object is located between the emitter 100E and the receiver 100R, a portion of the light provided by the emitter 100E is blocked, thereby detecting the presence or absence of the individual or object in a detection area.

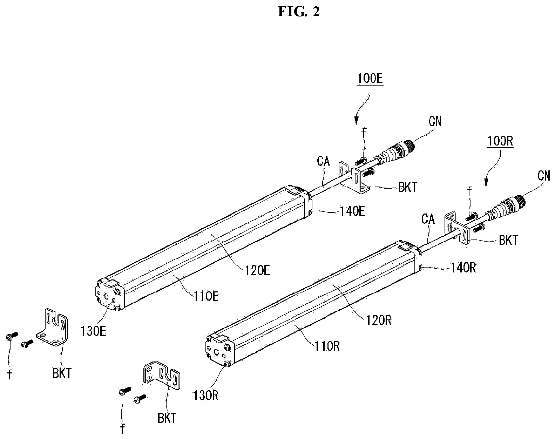

Referring to FIG. 2, the emitter 100E may include a housing 110E, a light emitter 120E, and caps 130E and 140E. The housing 110E may be elongated and may have a receiving space therein. The light emitter 120E may be formed on one surface of the housing 110E. The light emitter 120E may be elongated on one surface or one side of the housing 110E in a longitudinal direction of the housing 110E. The caps 130E and 140E may be mounted at one end or/or another end of the housing 110E. For example, the light emitter 120E and the housing 110E may be coupled to each other by the caps 130E and 140E.

The emitter 100E may include a cable CA. The cable CA may be electrically connected to the light emitter 120E. On one side of the housing 110E or the cap 140E, the cable CA may be connected to an external source. One side of the cable CA may be electrically connected to the light emitter 120E and another side of the cable CA may be connected to a connector CN. Accordingly, the emitter 100E may receive power or a control signal from an external source.

The emitter 100E may include a bracket BKT. The bracket BKT may be mounted at one or both ends of the emitter 100E or may be coupled thereto. The bracket BKT may be provided to install or mount the emitter 100E in predetermined equipment. The bracket BKT may be mounted to the emitter 100E by a coupling member f.

The receiver 100R may include a housing 110R, a light receiver 120R, and caps 130R and 140R. The receiver 100R may include a cable CA and a bracket BKT. The above description of the emitter 100E and components thereof may also apply to the housing 110R, the caps 130R and 140R, the cable CA, and/or the bracket BKT. In FIG. 2, the above description of the light emitter 120E may also apply to the light receiver 120R.

In the following description, the emitter 100E and the receiver 100R will not be distinguished from each other, but will be collectively referred to as the sensor 100.

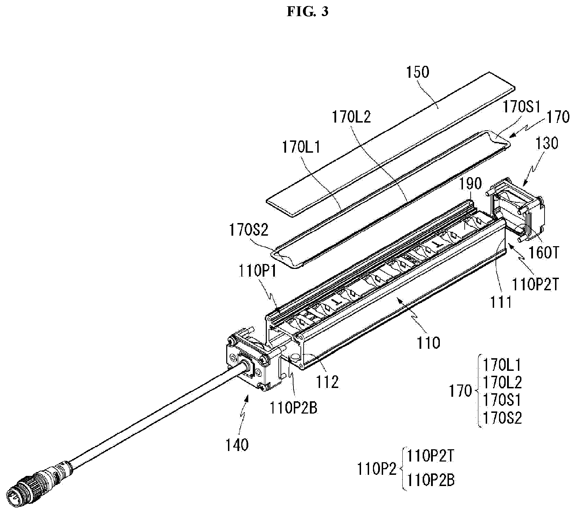

Referring to FIG. 3, the housing 110 may be elongated and may be hollow to provide a receiving space. For example, the housing 110 may be formed in the shape of a long cylinder or rectangular pillar. The housing 110 may have an opening 110P1 elongated on one side of the housing 110 in a longitudinal direction thereof. The opening 110P1 may be referred to as a first opening 110P1. The housing 110 may have an opening 110P2 or openings 110P2 at one or both ends thereof. The opening 110P2 or the openings 110P2 may be referred to as a second opening 110P2 or second openings 110P2. The openings 110P2 may include an upper opening 110P2T and a lower opening 110P2B. The first opening 110P1 may be connected to the second opening 110P2.

A light emitting element and/or a light receiving element may be mounted in the receiving space of the housing 110. A sensing module 190 may include the light emitting element and/or the light receiving element.

A cap 130 may block the upper opening 110P2T formed at an upper end of the housing 110. In addition, a cap 140 may block the lower opening 110P2B formed at a lower end of the housing 110. Both ends of the housing 110 may have the same structure.

A sealing member 160T may be disposed between the cap 130 and one end of the housing 110. The sealing member 160T may be disposed around a periphery of the upper opening 110P2T of the housing 110. The sealing member 160 may be referred to as a first sealing member 160T. The first sealing member 160T may be referred to as an upper sealing member 160T.

A cover 150 may have an elongated flat plate shape and may cover the first opening 110P1. The cover 150 may be referred to as a front cover 150 or a transparent cover 150.

A sealing member 170 may be disposed between the housing 110 and the cover 150. The sealing member 170 may be referred to as a second sealing member 170. The second sealing member may be referred to as a front sealing member 170.

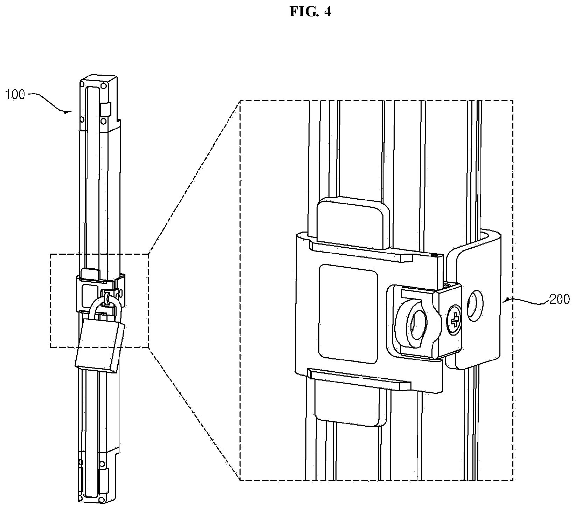

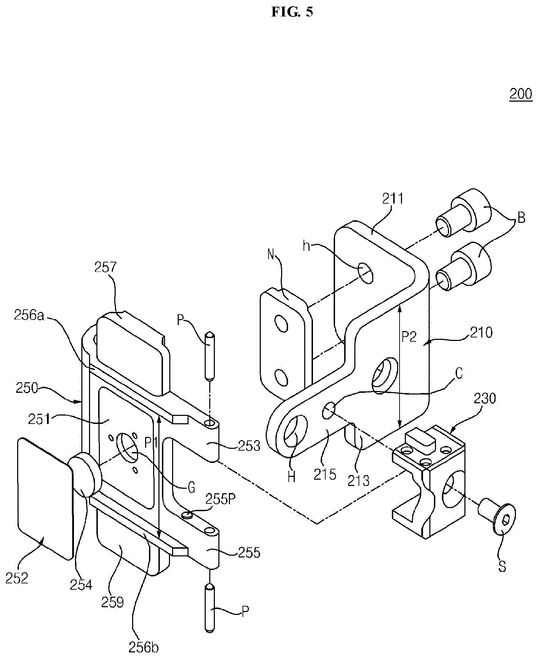

Referring to FIGS. 4 and 5, a sensor safety device 200 may be mounted to the sensor 100. The sensor safety device 200 may be installed on the outside of the sensor 100 while covering an outer surface of the sensor 100.

A bracket 210 may be bent. The bracket 210 may include a first part 211, a second part 213, and a third part 215. The second part 213 and may be bent and extend from the first part 211. For example, the second part 213 may form an angle of 90 degrees with respect to the first part 211.

The second part 213 may be bent by being rounded from the first part 211. The third part 215 may extend from the second part 213. A width of the third part 215 may be smaller than a width of the second part 213. The second part 213 may be disposed between the first part 211 and the third part 215.

Coupling holes h may be formed in the first part 211. Bolts B and nuts N may be coupled to each other through the coupling holes h. The coupling holes h may be formed in the second part 213, and the first part 211 may be omitted. A locking hole H may be formed at a position adjacent to an end of the third part 215. A fixing hole C may be formed in the third part 215 or the second part 213. The fixing hole C may be disposed between the locking hole H and the first part 211. A body 230 may be coupled to the bracket 210. The body 230 may be fixed to the fixing hole C by a screw S. The body 230 may be integrally formed with the bracket 210. In this case, the body 230 may be integrally formed with the second part 213 or the third part 215.

A cover 250 may be pivotally coupled or connected to the body 230. The cover 250 may have a generally plate shape. The cover 250 may include a center plate 251, wing plates 257 and 259, and bridges 253 and 255. A recess G may be formed in an outer surface of the center plate 251.

A magnet 254 may be inserted into the recess G of the center plate 251 to be fixed thereto. The magnet 254 and/or the recess G may be positioned within a range of a width P2 of the second part 213. Accordingly, when the cover 250 is fully opened by rotating about the body 230, the cover 250 may be fixed to the second part 213 by a magnetic force.

A cover plate 252 may cover a front surface of the center plate 251 and the magnet 254. A length or width of the cover plate 250 may be greater than a size of the magnet 254 or a width of the second part 213. For example, the cover plate 252 may include metal. Accordingly, the magnetic force generated by the magnet 254 acts through the cover plate 252 so that the cover 250 and the second part 213 may be firmly coupled to each other.

The wing plates 257 and 259 may extend from the top and/or bottom of the center plate 251. Accordingly, a light-blocking range of the cover 250 may be improved. The bridges 253 and 255 may extend to the left or right side of the center plate 251. For example, the wing plates 257 and 259 and the bridges 253 and 255 may form a right angle with each other.

The body 230 may be disposed between the bridges 253 and 255, and the cover 250 may be coupled to the body 230 by a pin P passing through the bridges 253 and 255. The cover 250 may pivot or rotate about the pin P as an axis.

A plurality of ribs 256a and 256b may be formed on a front surface of the cover 250. A first rib 256a may be adjacent to an upper side of the center plate 251 and may be elongated along the upper side, and a second rib 256b may be adjacent to a lower side of the center plate 251 and may be elongated along the lower side. The first rib 256a may be parallel to the second rib 256b. A distance P1 between the first rib 256a and the second rib 256n may be substantially equal to a distance P2 between an upper side and a lower side of the second part 213 of the bracket 210. Accordingly, the cover 250 rotates about the body 230 so that the bracket 210 may be inserted into the ribs 256a and 256b of the cover 250 to be fixed in position.

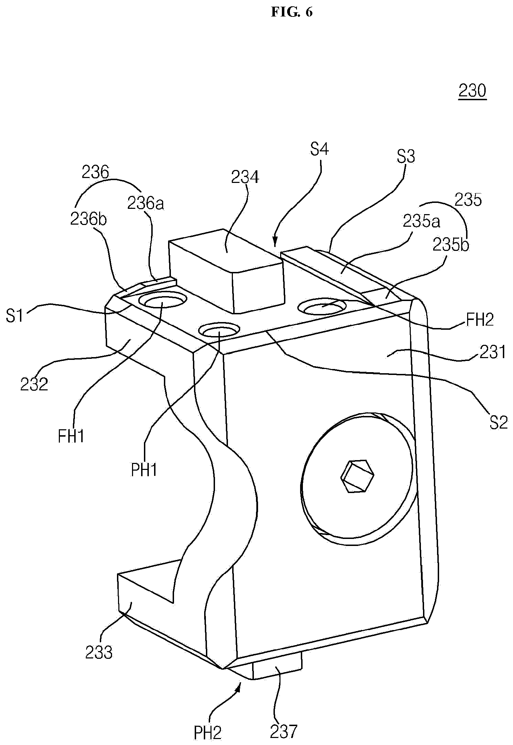

Referring to FIG. 6, the body 230 may include a first part 231, a second part 232, and a third part 233. The first part 231 may form a vertical wall. The second part 232 may be fixed to an upper end of the first part 231 and may form a horizontal floor. The third part 233 may be fixed to a lower end of the first part 231 and may form a horizontal floor. The third part 233 may face the second part 232 with respect to the first part 231.

A first stopper 234 may be disposed on the second part 232. The first stopper 232 may protrude from a top surface of the second part 232. The first stopper 234 may be in the shape of a rectangular pillar or a cylinder. The second stopper 237 may be disposed on the third part 233. The second stopper 237 may protrude from a bottom surface of the third part 233. The second stopper 237 may be in the shape of a rectangular pillar or a cylinder. The second stopper 237 may be opposite or symmetrical to the first stopper 234 with respect to the first part 231.

A first pin hole PH1 may be formed in the top surface of the second part 232. The first pin hole PH1 may be disposed at a position adjacent to one corner of the stopper 234. A first fixing hole FH1 may be disposed adjacent to a first side S1 of the second part 232, and a second fixing hole FH2 may be disposed adjacent to a second side S2 of the second part 232. The first side S1 and the second side S2 may be connected to each other. A corner formed between the first side S1 and the second side S2 may correspond to one corner of the stopper 234. For example, the first fixing hole FH1 may be disposed to form a right angle with the second fixing hole FH2 with respect to the first pin hole PH1. A second pin hole PH2 may be formed in the bottom surface of the third part 233. The second pin hole PH2 may be opposite or symmetrical to the first pin hole PH1 with respect to the first part 231.

A first rail 235 may extend parallel to a third side S3 of the second part 232 and may be formed on the second part 232 at a position adjacent to the third side S3 of the second part 232. The first rail 235 may have an inclined portion 235b and a flat portion 235a. The inclined portion 235b may be closer to the second side S2 of the second part 232 than the flat portion 235a, and the flat portion 235a may be closer to a fourth side S4 of the second part 232 than the inclined portion 235b. The inclined portion 235b may be connected to the flat portion 235a.

A second rail 236 may extend parallel to the fourth side S4 of the second part 232 and may be formed on the second part 232 at a position adjacent to the fourth side S4 of the second part 236. The second rail 236 may have an inclined portion 236b and a flat portion 236a. The inclined portion 236b may be closer to the first side S1 of the second part 232 than the flat portion 236a, and the flat portion 236a may be closer to the fourth side S4 of the second part 232 than the inclined portion 236b. The inclined portion 236b may be connected to the flat portion 236a.

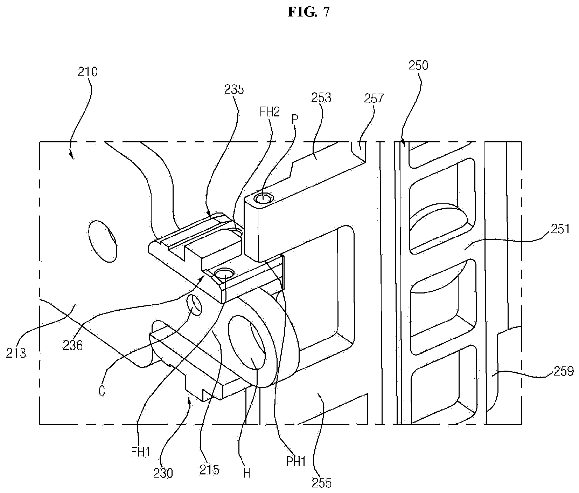

Referring to FIGS. 7 to 11, the cover 250 may be pivotally or rotatably coupled to the body 230. The cover 250 may be coupled to the body 230 by inserting the pin P into the pin hole PH1. The cover 250 may include a curved wall 256 for covering the multi-optical axis sensor 100. The curved wall 256 may extend from an end of the center plate 251 of the cover 250.

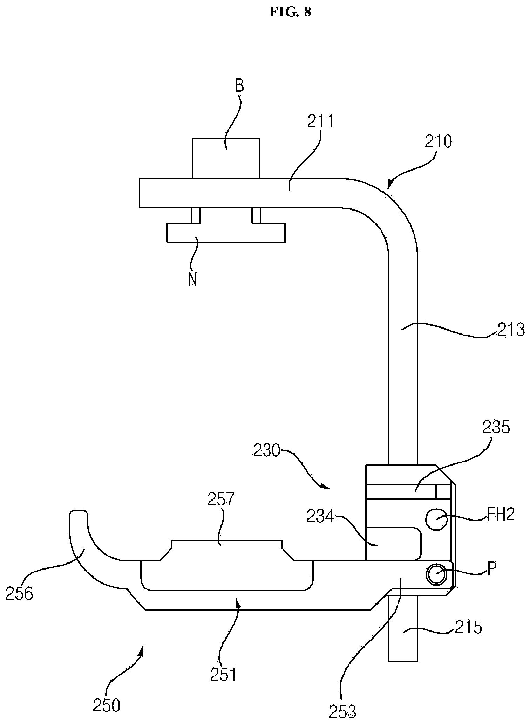

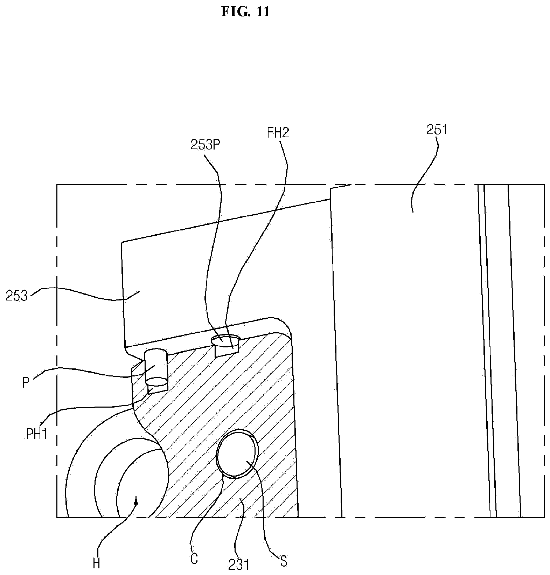

The cover 250 may rotate or pivot about an axis of the pin P. When the cover 250 faces the first part 211 of the bracket 210 (see FIG. 8), the cover 250 may be disposed over the first fixing hole FH1, and the bridge 253 of the cover 250 may contact the second rail 236. While moving up the inclined portion 236b of the second rail 236, the bridge 253 of the cover 250 may slide on the flat portion 236a. The cover 250 may include a fixing protrusion 253P (see FIG. 11) protruding from the bridge 253 at a position between the bridge 253 and the body 230. The fixing protrusion 253P may be inserted into the first fixing hole FH1. This state may be referred to as a state in which the locking device 200 covers or blocks an optical path of the sensor 110 or a state in which the locking device 200 closes the sensor 100. Accordingly, the cover 250 may be fixed at a position where the cover 250 faces the first part 211 of the bracket 210.

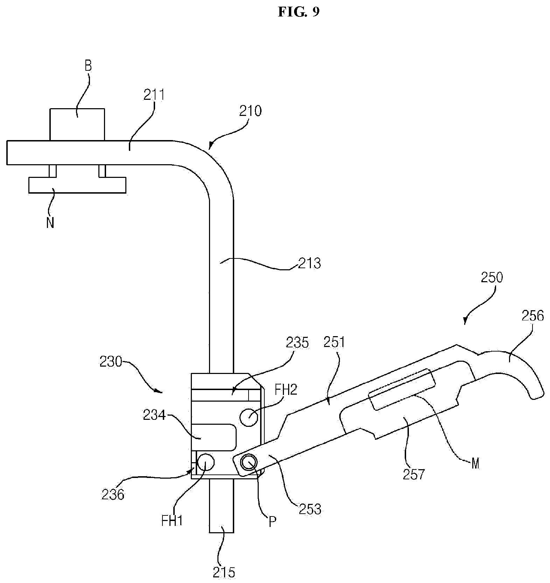

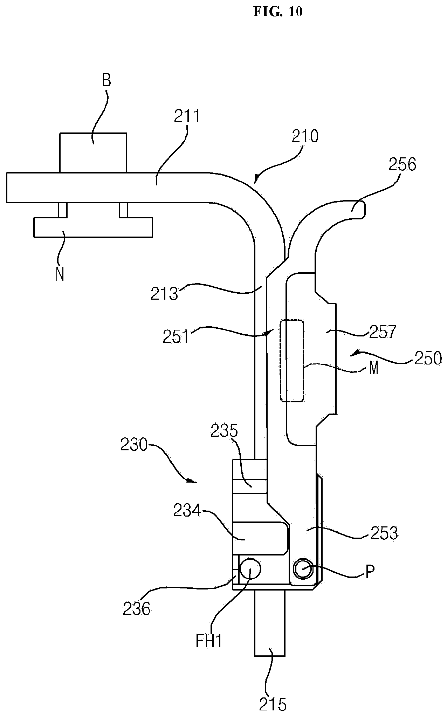

When the cover 250 rotates about the pin P (see FIG. 9), the cover 250 may face the second part 213 of the bracket 210 (see FIG. 10). While moving up the inclined portion 235b of the first rail 235, the bridge 253 of the cover 250 may slide on the flat portion 235a. The fixing protrusion 253P may be inserted into the second fixing hole FH2. A magnet M may be coupled to the second part 213 of the bracket 210 by a magnetic force. That is, in an open state (state illustrated in FIG. 10), the cover 250 may be fixed to the bracket 210 by the magnetic force generated by the magnet M 254. Accordingly, work convenience may be improved. This state may be referred to as a state in which the locking device 200 opens an optical path of the sensor 110 or a state in which the locking device 200 opens the sensor 100.

Accordingly, the cover 250 may be firmly fixed at a position where the cover 250 faces the second part 213 of the bracket 210.

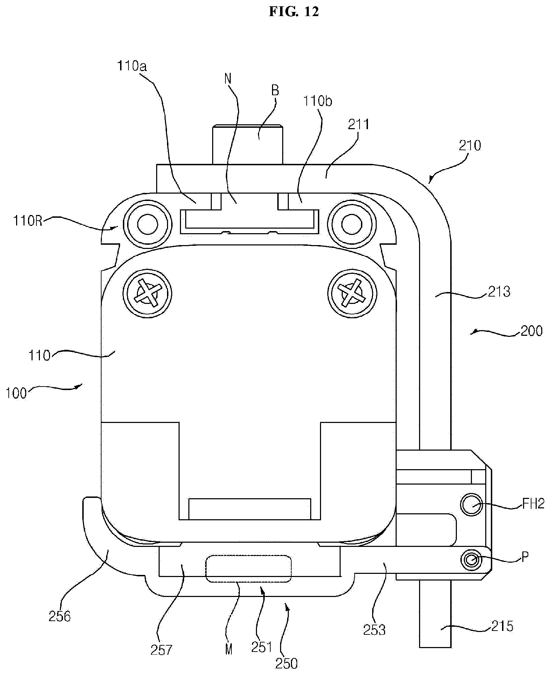

Referring to FIG. 12, the locking device 200 may be coupled to the sensor 100. The sensor 100 may include a coupling rail 110R on a rear surface of the housing 110. The coupling rail 110R may also be formed on a side surface of the housing 110. The coupling rail 110R may have a generally C-shape. The nut N have a generally T-shape. The coupling rail 110R may include holders 110a and 110b facing each other. The holders 110a and 110b may be inserted between the nut N and the first part 211 of the bracket 210. When the coupling rail 110R is formed on the side surface of the housing 110, the holders 110a and 110b may be inserted between the nut N and the second part 213 of the bracket 210.

The cover 250 of the locking device 200 may cover the transparent cover 150 (see FIG. 3) of the sensor 100. The cover 250 may cover and wrap the housing 110 and/or the transparent cover 150 of the sensor 100. The curved wall 256 may cover the side surface of the housing 110 at the front thereof. The wing plate 257 may protrude toward the transparent cover 150. When the cover 250 covers the transparent cover 150, the wing plate 257 may contact the transparent cover 150. When the cover 250 of the locking device 200 covers the transparent cover 150 of the sensor 100, light incident from the light emitter on the light receiver of the sensor 100 is blocked, and it is determined that a worker enters a dangerous area, such that the operation of mechanical equipment, such as robots, conveyor belts, etc., in the dangerous area may be stopped.

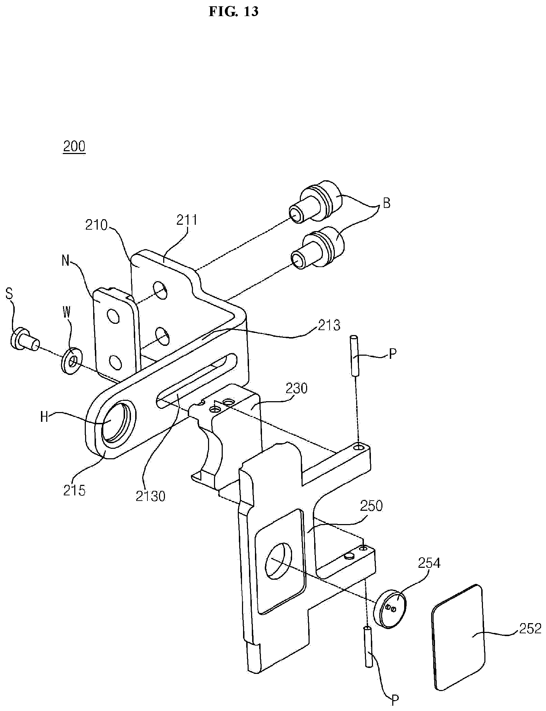

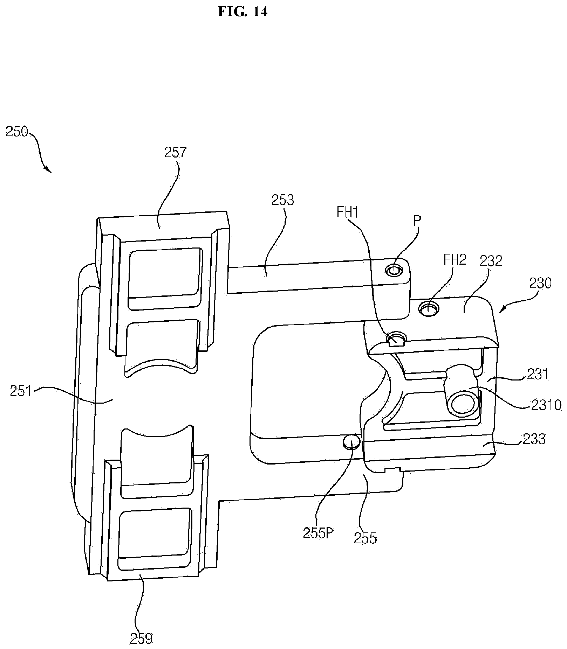

Referring to FIGS. 13 and 14, the bracket 210 may be bent. The bracket 210 may include the first part 211, the second part 213, and the third part 215. The second part 213 may be bent and extend from the first part 211. For example, the second part 213 may form an angle of 90 degrees with respect to the first part 211.

The second part 213 may be bent by being rounded from the first part 211. The third part 215 may extend from the second part 213. A width of the third part 215 may be substantially equal to a width of the second part 213. The second part 213 may be disposed between the first part 211 and the third part 215.

The bolts B and nuts N may be coupled to the first part 211 through coupling holes. The coupling holes may be formed in the second part 213, and the first part 211 may be omitted. The locking hole H may be formed adjacent to an end of the third part 215.

A sliding slot 2130 may be formed in the second part 213 of the bracket 210. The second part 213 may be bent from the first part 211 to be elongated. The third part 215 may be formed at an end of the second part 213, and the locking hole H may be formed in the third part 215. The sliding slot 2130 may be elongated between the locking hole H and the first part 211 and may be formed through the second part 213. The sliding slot 2130 may be referred to as a guide slot 2130.

The body 230 may include a slider 2310. The slider 2310 may be referred to as a stopper 2310 or a guide protrusion 2310. The slider 2310 may protrude from one surface of the body 230. The slider 2310 may protrude or extend from one surface of the first part 231. The slider 2310 may be disposed between the second part 232 and the third part 233. The slider 2310 may be inserted into the sliding slot 2130 of the bracket 210. The body 230 may move from the first part 211 of the bracket 210 toward the third part 215 thereof, and may move from the third part 215 toward the first part 211. The sliding slot 2130 may limit a movement range of the body 230. The cover 250 may be pivotally coupled or connected to the body 230. The cover 250 may have a generally plate shape. The cover 250 may include the center plate 251, the wing plates 257 and 259, and the bridges 253 and 255. A recess may be formed in an outer surface of the center plate 251.

The magnet 254 may be inserted into the recess of the center plate 251 to be fixed thereto. The magnet 254 and/or the recess may be positioned between the bridges 253 and 255. The magnet 254 and/or the recess may be positioned within a range of the width of the second part 213. For example, a position of the magnet 254 may correspond to the sliding slot 2130 or the locking hole H. Accordingly, while the cover 252 is fixed to or in contact with the second part 213 of the bracket 210 by a magnetic force, the body 230 may move in the sliding slot 2130. When the cover 250 is fully opened by rotating about the body 230, the cover 250 may be fixed to the second part 213 by the magnetic force.

The cover plate 252 may cover a front surface of the center plate 251 and the magnet 254. A size of the cover plate 252 may be greater than a size of the magnet 254 and may be smaller than a size of the center plate 251. For example, a distance between an upper side and a lower side of the cover plate 252 may correspond to the width of the second part 231 of the bracket 210. The cover plate 252 may include metal. Accordingly, the magnetic force generated by the magnet 254 acts through the cover plate 252 so that the cover 250 and the second part 213 may be firmly coupled to each other. In other words, as the magnet 254 is disposed at a position corresponding to the sliding slot 2130 and/or the locking hole H, a coupling force between the magnet 254 and the second part 213 of the bracket 210 may decrease. The coupling force may increase as the cover plate 252 allows for a wider range of magnetic force.

The wing plates 257 and 259 may extend from the top and/or bottom of the center plate 251. Accordingly, a light-blocking range of the cover 250 may be improved. The bridges 253 and 255 may extend to the left or right side of the center plate 251. For example, the wing plates 257 and 259 and the bridges 253 and 255 may form a right angle with each other.

The body 230 may be disposed between the bridges 253 and 255, and the cover 250 may be coupled to the body 230 by the pin P passing through the bridges 253 and 255. The cover 250 may pivot or rotate about the pin P as an axis.

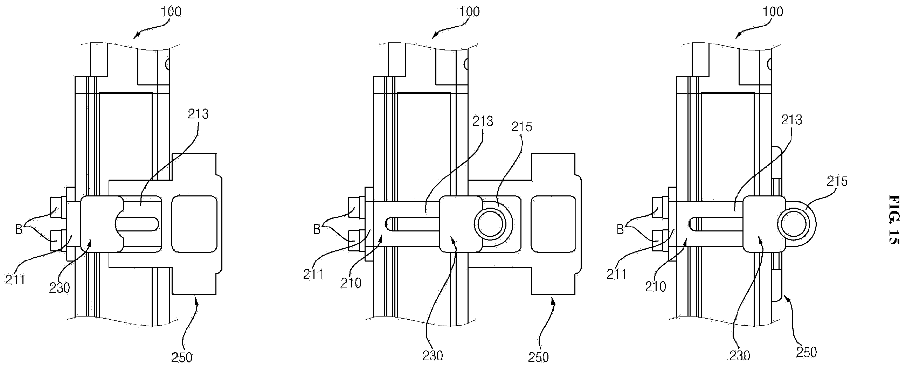

Referring to FIG. 15, the body 230 may move on the bracket 210. The body 230 may move in a longitudinal direction of the second part 213 of the bracket 210. The body 230 may move on a predetermined section of the bracket 210. A movement range of the body 230 may be limited by a length of the slot 2130 (see FIG. 13). While the body 230 moves on the bracket 210, the cover 250 may remain unrotated on the body 230. This may be a state in which the locking device 200 opens the sensor 100.

When the body 230 is close to the first part 211 of the bracket 210, the cover 250 may be parallel to the second part 213 of the bracket 210. In this case, the cover 250 may be coupled to or in contact with the second part 213 of the bracket 210 by a magnetic force. The body 230 may move from front to rear or from left to right on the bracket 250. While the body 230 moves on the bracket 210, the cover 250 may remain coupled to or in contact with the second part 213 of the bracket 210. When the body 230 moves on the bracket 250 and the body 230 moves closer to the third part 215 of the bracket 210, the cover 250 may rotate about the body 230 to be disposed parallel to the first part 211 of the bracket 210. That is, when the body 230 moves closer to the third part 215 of the bracket 210, the cover 250 may rotate about the body 230.

The cover 250 may rotate about the body 230 as an axis in a clockwise direction and/or counterclockwise direction. The cover 250 may rotate about the body as an axis in both directions. For example, when the body 230 moves closer to the third part 215, the cover 250 may rotate 90 degrees in the counterclockwise direction to cover the front surface of the sensor 100. This may be a state in which the locking device 200 closes the sensor 100.

Accordingly, even when the sensor 100 is installed in a narrow space, the cover 250 may be easily operated.

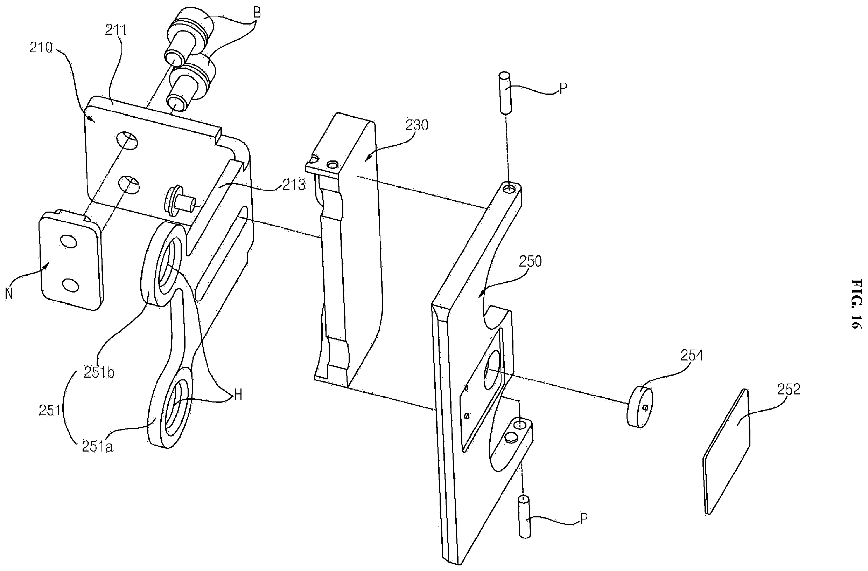

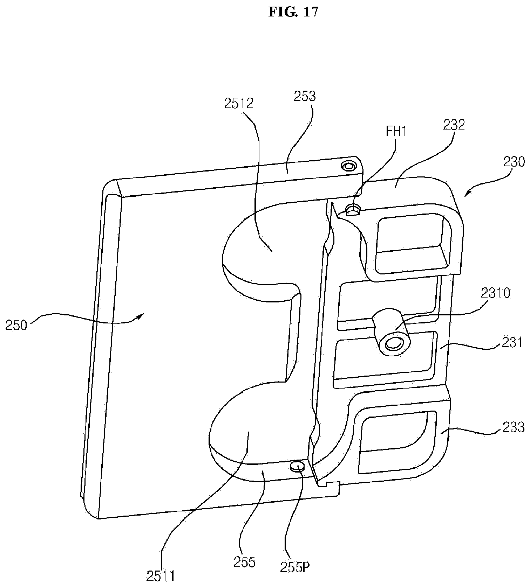

Referring to FIGS. 16 and 17, the bracket 210 may be bent. The bracket 210 may include the first part 211, the second part 213, and the third part 215. The second part 213 may be bent and extend from the first part 211. For example, the second part 213 may form an angle of 90 degrees with respect to the first part 211.

The second part 213 may be bent by being rounded from the first part 211. The third part 215 may extend from the second part 213. The second part 213 may be disposed between the first part 211 and the third part 215.

The bolts B and nuts N may be coupled to the first part 211 through coupling holes. The coupling holes may be formed in the second part 213, and the first part 211 may be omitted. The locking hole H may be formed adjacent to an end of the third part 215.

The sliding slot 2130 may be formed in the second part 213 of the bracket 210. The second part 213 may be bent from the first part 211 to be elongated. The third part 215 may be formed at an end of the second part 213, and the locking hole H may be formed in the third part 215. The sliding slot 2130 may be elongated between the locking hole H and the first part 211 and may be formed through the second part 213. The sliding slot 2130 may be referred to as a guide slot 2130.

The third part 215 of the bracket 210 may include a first extension portion 215a and a second extension portion 215b. The first extension portion 215a may protrude and extend from one corner of the second part 213 or the third part 125. The second extension portion 215b may protrude and extend from another corner of the second part 213 or the third part 215. A first locking hole H may be formed in the first extension portion 215a, and a second locking hole H may be formed in the second extension portion 215b.

The body 230 may include the slider 2310. The slider 2310 may be referred to as a stopper 2310 or a guide protrusion 2310. The slider 2310 may protrude from one surface of the body 230. The slider 2310 may protrude or extend from one surface of the first part 231. The slider 2310 may be disposed between the second part 232 and the third part 233 of the body 230. The slider 2310 may be inserted into the sliding slot 2130 of the bracket 210. The body 230 may move from the first part 211 of the bracket 210 toward the third part 215 thereof, and may move from the third part 215 toward the first part 211. The sliding slot 2130 may limit a movement range of the body 230.

The cover 250 may be pivotally coupled or connected to the body 230. The cover 250 may have a generally plate shape. The cover 250 may include the bridges 253 and 255. A recess may be formed in an outer surface of the cover 250.

The magnet 254 may be inserted into the recess of the cover 250. The magnet 254 and/or the recess may be positioned between the bridges 253 and 255. The magnet 254 and/or the recess may be positioned within a range of the width of the second part 213. For example, a position of the magnet 254 may correspond to the sliding slot 2130. Accordingly, while the cover 252 is fixed to or in contact with the second part 213 of the bracket 210 by a magnetic force, the body 230 may move in the sliding slot 2130. When the cover 250 is fully opened by rotating about the body 230, the cover 250 may be fixed to the second part 213 by the magnetic force.

The cover plate 252 may cover the magnet 254. A size of the cover plate 252 may be greater than a size of the magnet 254. For example, a distance between an upper side and a lower side of the cover plate 252 may correspond to the width of the second part 231 of the bracket 210, or may be smaller than the width of the second part 213. The cover plate 252 may include metal. Accordingly, the magnetic force generated by the magnet 254 acts through the cover plate 252 so that the cover 250 and the second part 213 may be firmly coupled to each other. In other words, as the magnet 254 is disposed at a position corresponding to the sliding slot 2130, a coupling force between the magnet 254 and the second part 213 of the bracket 210 may decrease. The coupling force may increase as the cover plate 252 allows for a wider range of magnetic force.

The cover 250 may have a plate shape. The cover 250 may include a first through hole 2511 and a second through hole 2512. The first through hole 2511 may have a shape corresponding to the first extension portion 215a and may be formed by cutting out the cover 250, and the second through hole 2512 may have a shape corresponding to the second extension portion 215b and may be formed by cutting out the cover 250. When the cover 250 rotates about the body 230, the first extension portion 215a of the bracket 210 may pass through the first through hole 2511 of the cover 250, and the second extension portion 215b of the bracket 210 may pass through the second through hole 2512 of the cover 250.

The body 230 may be disposed between the bridges 253 and 255, and the cover 250 may be coupled to the body 230 by the pin P passing through the bridges 253 and 255. The cover 250 may pivot or rotate about the pin P as an axis.

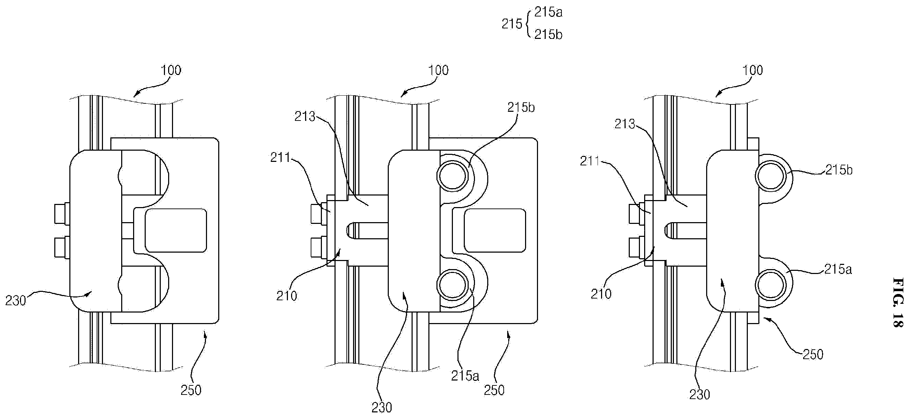

Referring to FIG. 18, the body 230 may move on the bracket 210. The body 230 may move in a longitudinal direction of the second part 213 of the bracket 210. The body 230 may move on a predetermined section of the bracket 210. A movement range of the body 230 may be limited by a length of the slot 2130 (see FIG. 13). While the body 230 moves on the bracket 210, the cover 250 may remain unrotated on the body 230. This may be a state in which the locking device 200 opens the sensor 100.

When the body 230 is close to the first part 211 of the bracket 210, the cover 250 may be parallel to the second part 213 of the bracket 210. In this case, the cover 250 may be coupled to or in contact with the second part 213 of the bracket 210 by a magnetic force. The body 230 may move from front to rear or from left to right on the bracket 250. While the body 230 moves on the bracket 210, the cover 250 may remain coupled to or in contact with the second part 213 of the bracket 210.

When the body 230 moves on the bracket 250 and the body 230 moves closer to the third part 215 of the bracket 210, the cover 250 may rotate about the body 230 to be disposed parallel to the first part 211 of the bracket 210. That is, when the body 230 moves closer to the third part 215 of the bracket 210, the cover 250 may rotate about the body 230.

The cover 250 may rotate about the body 230 as an axis in a clockwise direction and/or counterclockwise direction. The cover 250 may rotate about the body as an axis in both directions. For example, when the body 230 moves closer to the third part 215, the cover 250 may rotate 90 degrees in the counterclockwise direction to cover the front surface of the sensor 100. This may be a state in which the locking device 200 closes the sensor 100.

Accordingly, even when the sensor 100 is installed in a narrow space, the cover 250 may be easily operated.

## Claims

1. A locking device (200) for a multi-optical axis sensor (100) configured to detect a predetermined area by using a plurality of light sources, the locking device comprising:
a body (230);
a pin (P) protruding from the body (230); and
a cover (250) pivotally connected to the body (230) so as to pivot about the pin (P),
wherein the cover (250) comprises:
- a center plate (251); and
- a plurality of bridges (253, 255) which are elongated from the center plate (251) in one direction and include a first bridge (253) extending in the one direction and a second bridge (255) extending in the one direction and spaced apart from the first bridge (253),
wherein the body (230) further comprises a locking hole (H) formed in a bracket (210) that is integrally formed with the body (230),
wherein the body (230) is disposed between the first bridge (253) and the second bridge (255), and when the cover (250) faces the body (230), the cover (250) is fixed to the body (230) by a magnetic force,
wherein when the cover (250) covers an optical path of the multi-optical axis sensor (100), the locking hole (H) protrudes from an outer surface of the cover (250) of the locking device (200).

2. The locking device (200) of claim 1, wherein the body (230) comprises:
- a first part (231);
- a second part (232) disposed on one side of the first part (231) and connected to the first part (231); and
- a third part (233) facing the second part (232) with respect to the first part (231) and connected to the first part (231),
wherein a distance between the first bridge (253) and the second bridge (255) corresponds to a distance between an outer surface of the second part (232) of the body (230) and an outer surface of the third part (233) thereof.

3. The locking device (200) of claim 1, further comprising:
the bracket (210) having a coupling hole (h); and
a bolt (B) coupled to the coupling hole (h) of the bracket (210).

4. The locking device (200) of claim 3, further comprising a nut (N) fastened to the bracket (210) and contacting the bolt (B),
wherein the bolt (B) is rotated to be coupled to the nut (N).

5. A sensor assembly comprising a sensor (100) and the locking device (200) of claim 1, coupled to the sensor (100),
wherein the sensor (100) comprises:
- an emitter (100E) configured to provide light, and a receiver (100R) configured to detect the light provided by the emitter (100E),
wherein the emitter (100E) comprises:
- an emitter housing (110E) elongated and having an inner receiving space;
- a light emitter (120E) disposed in the inner receiving space of the emitter housing (110E) in a longitudinal direction of the emitter housing (110E); and
- an emitter transparent cover (150) which is coupled to one surface of the emitter housing (110E) and through which light emitted by the light emitter (120E) passes,
wherein the receiver (100R) comprises:
- a receiver housing (110R) elongated and having an inner receiving space;
- a light receiver (120R) disposed in the inner receiving space of the receiver housing (110R) in a longitudinal direction of the receiver housing (110R), and corresponding to the light emitter (120E) of the emitter (100E); and
a receiver transparent cover (150) which is coupled to one surface of the receiver housing (110R) and through which light incident on the light receiver (120R) passes,
wherein the locking device further comprises:
wherein when the cover (250) of the locking device (200) covers the transparent cover (150) of the emitter housing (110E) or the transparent cover (150) of the receiver housing (110R), the locking hole (H) protrudes from an outer surface of the cover (250) of the locking device (200).

6. The sensor assembly of claim 5, wherein the locking device (200) comprises:
the bracket (210) having a coupling hole (h);
a bolt (B) coupled to the coupling hole (h) of the bracket (210); and
a nut (N) fastened to the bracket (210) and contacting the bolt (B).

7. The sensor assembly of claim 6, wherein the housing (100) further comprises a coupling rail (110R, 110a, 110b) formed on another surface of the housing (110),
wherein:
the nut (N) of the locking device (200) is mounted on the coupling rail (110R, 110a, 110b); and
the cover (250) of the locking device (200) covers or opens the transparent cover (150).

8. The sensor assembly of claim 7, wherein the cover (250) of the locking device (200) further comprises a wall (256) extending from an end,
wherein when the cover (250) of the locking device (200) covers the transparent cover (150), the wall (256) covers a corner of the housing (110) that is adjacent to the transparent cover (150).

9. The sensor assembly of claim 7, wherein coupling between the nut (N) of the locking device (200) and the coupling rail (110R, 110, 110b) of the housing (110) increases by rotation of the bolt (B).

## Patentansprüche

1. Verriegelungsvorrichtung (200) für einen Sensor (100) mit mehreren optischen Achsen, der dazu eingerichtet ist, unter Verwendung einer Mehrzahl von Lichtquellen einen vorbestimmten Bereich zu erfassen, wobei die Verriegelungsvorrichtung umfasst:
einen Körper (230);
einen Stift (P), der von dem Körper (230) vorsteht; und
eine Abdeckung (250), die schwenkbar mit dem Körper (230) verbunden ist, um sich um den Stift (P) herum zu schwenken,
wobei die Abdeckung (250) umfasst:
eine Mittelplatte (251); und
eine Mehrzahl von Stegen (253, 255), die sich von der Mittelplatte (251) in einer Richtung erstrecken und einen ersten Steg (253), der sich in der einen Richtung erstreckt, und einen zweiten Steg (255) umfassen, der sich in der einen Richtung erstreckt und von dem ersten Steg (253) beabstandet ist,
wobei der Körper (230) ferner ein Verriegelungsloch (H) umfasst, das in einer Halterung (210) ausgebildet ist, die einstückig mit dem Körper (230) ausgebildet ist,
wobei der Körper (230) zwischen dem ersten Steg (253) und dem zweiten Steg (255) angeordnet ist und, wenn die Abdeckung (250) dem Körper (230) gegenüberliegt, die Abdeckung (250) durch eine Magnetkraft an dem Körper (230) fixiert ist,
wobei, wenn die Abdeckung (250) einen optischen Pfad des Sensors (100) mit mehreren optischen Achsen abdeckt, das Verriegelungsloch (H) von einer Außenfläche der Abdeckung (250) der Verriegelungsvorrichtung (200) vorsteht.

2. Verriegelungsvorrichtung (200) nach Anspruch 1, wobei der Körper (230) umfasst:
einen ersten Teil (231);
einen zweiten Teil (232), der auf einer Seite des ersten Teils (231) angeordnet und mit dem ersten Teil (231) verbunden ist; und
einen dritten Teil (233), der dem zweiten Teil (232) in Bezug auf den ersten Teil (231) gegenüberliegt und mit dem ersten Teil (231) verbunden ist,
wobei ein Abstand zwischen dem ersten Steg (253) und dem zweiten Steg (255) einem Abstand zwischen einer Außenfläche des zweiten Teils (232) des Körpers (230) und einer Außenfläche des dritten Teils (233) desselben entspricht.

3. Verriegelungsvorrichtung (200) nach Anspruch 1, ferner umfassend:
die Halterung (210) mit einem Kopplungsloch (h); und
einen Bolzen (B), der mit dem Kopplungsloch (h) der Halterung (210) gekoppelt ist.

4. Verriegelungsvorrichtung (200) nach Anspruch 3, ferner umfassend eine Mutter (N), die an der Halterung (210) befestigt ist und den Bolzen (B) berührt,
wobei der Bolzen (B) gedreht wird, um mit der Mutter (N) gekoppelt zu werden.

5. Sensoranordnung, umfassend einen Sensor (100) und die mit dem Sensor (100) gekoppelte Verriegelungsvorrichtung (200) nach Anspruch 1,
wobei der Sensor (100) umfasst:
einen Sender (100E), der dazu eingerichtet ist, Licht bereitzustellen, und einen Empfänger (100R), der dazu eingerichtet ist, das von dem Sender (100E) bereitgestellte Licht zu erfassen,
wobei der Sender (100E) umfasst:
ein längliches Sendergehäuse (110E) mit einem inneren Aufnahmeraum;
einen Lichtsender (120E), der in dem inneren Aufnahmeraum des Sendergehäuses (110E) in einer Längsrichtung des Sendergehäuses (110E) angeordnet ist; und
eine transparente Senderabdeckung (150), die mit einer Oberfläche des Sendergehäuses (110E) gekoppelt ist und durch die von dem Lichtsender (120E) emittiertes Licht hindurchtritt,
wobei der Empfänger (100R) umfasst:
ein längliches Empfängergehäuse (110R) mit einem inneren Aufnahmeraum;
einen Lichtempfänger (120R), der in dem inneren Aufnahmeraum des Empfängergehäuses (110R) in einer Längsrichtung des Empfängergehäuses (110R) angeordnet ist und dem Lichtsender (120E) des Senders (100E) entspricht; und
eine transparente Empfängerabdeckung (150), die mit einer Oberfläche des Empfängergehäuses (110R) gekoppelt ist und durch die auf den Lichtempfänger (120R) einfallendes Licht hindurchtritt,
wobei die Verriegelungsvorrichtung ferner umfasst:
wobei, wenn die Abdeckung (250) der Verriegelungsvorrichtung (200) die transparente Abdeckung (150) des Sendergehäuses (110E) oder die transparente Abdeckung (150) des Empfängergehäuses (110R) abdeckt, das Verriegelungsloch (H) von einer Außenfläche der Abdeckung (250) der Verriegelungsvorrichtung (200) vorsteht.

6. Sensoranordnung nach Anspruch 5, wobei die Verriegelungsvorrichtung (200) umfasst:
die Halterung (210) mit einem Kopplungsloch (h);
einen Bolzen (B), der mit dem Kopplungsloch (h) der Halterung (210) gekoppelt ist; und
eine Mutter (N), die an der Halterung (210) befestigt ist und den Bolzen (B) berührt.

7. Sensoranordnung nach Anspruch 6, wobei das Gehäuse (100) ferner eine Kopplungsschiene (110R, 110a, 110b) umfasst, die an einer anderen Oberfläche des Gehäuses (110) ausgebildet ist,
wobei:
die Mutter (N) der Verriegelungsvorrichtung (200) an der Kopplungsschiene (110R, 110a, 110b) montiert ist; und
die Abdeckung (250) der Verriegelungsvorrichtung (200) die transparente Abdeckung (150) abdeckt oder freilegt.

8. Sensoranordnung nach Anspruch 7, wobei die Abdeckung (250) der Verriegelungsvorrichtung (200) ferner eine Wand (256) umfasst, die sich von einem Ende erstreckt,
wobei, wenn die Abdeckung (250) der Verriegelungsvorrichtung (200) die transparente Abdeckung (150) abdeckt, die Wand (256) eine Ecke des Gehäuses (110) abdeckt, die an die transparente Abdeckung (150) angrenzt.

9. Sensoranordnung nach Anspruch 7, wobei die Kopplung zwischen der Mutter (N) der Verriegelungsvorrichtung (200) und der Kopplungsschiene (110R, 110, 110b) des Gehäuses (110) durch Drehen des Bolzens (B) verstärkt wird.

## Revendications

1. Dispositif de verrouillage (200) pour un capteur à axes optiques multiples (100) conçu pour détecter une zone prédéterminée à l'aide d'une pluralité de sources lumineuses, le dispositif de verrouillage comprenant:
un corps (230);
une goupille (163) faisant saillie du corps (230); et
un couvercle (250) relié en pivotement au corps (230) de manière à pivoter autour de la goupille (P),
dans lequel le couvercle (250) comprend:
- une plaque centrale (251); et
- une pluralité de ponts (253, 255) qui s'étendent à partir de la plaque centrale (251) dans une direction et qui comprennent un premier pont (253) s'étendant dans ladite direction et un deuxième pont (255) s'étendant également dans ladite direction et espacé du premier pont (253),
dans lequel le corps (230) comprend en outre un trou de verrouillage (H) ménagé dans un support (210) qui est formant d'une seule pièce avec le corps (230),
dans lequel le corps (230) est disposé entre le premier pont (253) et le deuxième pont (255), et lorsque le couvercle (250) fait face au corps (230), le couvercle (250) est fixé au corps (230) par une force magnétique,
dans lequel, lorsque le couvercle (250) recouvre un trajet optique du capteur à axes optiques multiples (100), le trou de verrouillage (H) fait saillie d'une surface extérieure du couvercle (250) du dispositif de verrouillage (200).

2. Dispositif de verrouillage (200) selon la revendication 1, dans lequel le corps (230) comprend:
- une première partie (231);
- une deuxième partie (232) disposée sur un côté de la première partie (231) et reliée à la première partie (231); et
- une troisième partie (233) faisant face à la deuxième partie (232) par rapport à la première partie (231) et reliée à la première partie (231),
dans lequel la distance entre le premier pont (253) et le deuxième pont (255) correspond à la distance entre une surface extérieure de la deuxième partie (232) du corps (230) et une surface extérieure de la troisième partie (233) de ce dernier.

3. Dispositif de verrouillage (200) selon la revendication 1, comprenant en outre:
le support (210) comportant un trou d'accouplement (h); et
un boulon (B) vissé dans le trou de fixation (h) du support (210).

4. Dispositif de verrouillage (200) selon la revendication 3, comprenant en outre un écrou (N) fixé au support (210) et en contact avec le boulon (B),
dans lequel le boulon (B) est vissé pour être accouplé à l'écrou (N).

5. Ensemble capteur comprenant un capteur (100) et le dispositif de verrouillage (200) selon la revendication 1, couplé au capteur (100),
dans lequel le capteur (100) comprend:
- un émetteur (100E) conçu pour émettre de la lumière, et un récepteur (100R) conçu pour détecter la lumière émise par l'émetteur (100E),
dans lequel l'émetteur (100E) comprend:
- un boîtier d'émetteur (110E) allongé et comportant un espace de réception interne;
- un émetteur de lumière (120E) disposé dans l'espace de réception interne du boîtier d'émetteur (110E), dans le sens longitudinal du boîtier d'émetteur (110E); et
- un couvercle transparent d'émetteur (150) qui est accouplé à l'une surface du boîtier d'émetteur (110E) et à travers lequel passe la lumière émise par l'émetteur de lumière (120E),
dans lequel le récepteur (100R) comprend:
- un boîtier de récepteur (110R) allongé et comportant un espace de réception interne;
- un récepteur de lumière (120R) disposé dans l'espace de réception interne du boîtier de récepteur (110R), dans le sens longitudinal du boîtier de récepteur (110R), et correspondant à l'émetteur de lumière (120E) de l'émetteur (100E); et
un couvercle transparent de récepteur (150), qui est accouplé à une surface du boîtier de récepteur (110R) et à travers lequel passe la lumière incidente sur le récepteur de lumière (120R),
dans lequel le dispositif de verrouillage comprend en outre:
dans lequel, lorsque le couvercle (250) du dispositif de verrouillage (200) recouvre le couvercle transparent (150) du boîtier d'émetteur (110E) ou le couvercle transparent (150) du boîtier de récepteur (110R), le trou de verrouillage (H) fait saillie d'une surface extérieure du couvercle (250) du dispositif de verrouillage (200).

6. Ensemble capteur selon la revendication 5, dans lequel le dispositif de verrouillage (200) comprend:
le support (210) comportant un trou d'accouplement (h);
un boulon (B) vissé dans le trou d'accouplement (h) du support (210); et
un écrou (N) fixé au support (210) et en contact avec le boulon (B).

7. Ensemble capteur selon la revendication 6, dans lequel le boîtier (100) comprend en outre un rail d'accouplement (110R, 110a, 110b) formé sur une autre surface du boîtier (110),
dans lequel:
l'écrou (N) du dispositif de verrouillage (200) est monté sur le rail d'accouplement (110R, 110a, 110b); et
le couvercle (250) du dispositif de verrouillage (200) recouvre ou ouvre le couvercle transparent (150).

8. Ensemble capteur selon la revendication 7, dans lequel le couvercle (250) du dispositif de verrouillage (200) comprend en outre une paroi (256) partant d'une extrémité,
dans lequel, lorsque le couvercle (250) du dispositif de verrouillage (200) recouvre le couvercle transparent (150), la paroi (256) recouvre un coin du boîtier (110) qui est adjacent au couvercle transparent (150).

9. Ensemble capteur selon la revendication 7, dans lequel l'accouplement entre l'écrou (N) du dispositif de verrouillage (200) et le rail d'accouplement (110R, 110, 110b) du boîtier (110) s'accroît sous l'effet de la rotation du boulon (B).
